# EUROPÄISCHE PATENTSCHRIFT

(11) **EP 0 998 365 B1**
(45) Veröffentlichungstag und Bekanntmachung des Hinweises auf die Patenterteilung: **12.02.2003**
(21) Anmeldenummer: 99906046.0
(22) Anmeldetag: 14.01.1999
(51) Int. Cl.: B23D 49/08, B23D 59/00

(54) **HUBSÄGE MIT KAPPTISCH**
PENDULUM SAW WITH A CUTTING TABLE
SCIE A MOUVEMENT ALTERNATIF AVEC TABLE DE COUPE

(30) Priorität: 03.02.1998 DE 19803955
(43) Veröffentlichungstag der Anmeldung: 10.05.2000
(73) Patentinhaber: ROBERT BOSCH GMBH, 70442 Stuttgart (DE)
(72) Erfinder: ENGELFRIED, Uwe, D-73760 Ostfildern (DE); AGLASSINGER, Peter, D-73728 Esslingen (DE); KEUSCH, Siegfried, D-73779 Deizisau (DE)
(86) Internationale Anmeldenummer: DE9900048
(87) Internationale Veröffentlichungsnummer: WO99039858

(56) Entgegenhaltungen:
- DE-A- 1 930 127
- DE-A- 3 733 454
- DE-A- 4 410 804
- DE-U- 6 929 900
- US-A- 1 898 956
- US-A- 3 572 409
- US-A- 3 574 315
- US-A- 3 998 121
- US-A- 5 279 198
- US-A- 5 560 273

## Beschreibung

### Stand der Technik

Die Erfindung geht aus von einer Hubsäge mit Kapptisch nach dem Oberbegriff des Anspruchs 1.

Es sind Kapp-Sägen bekannt, die aus einer schwenkbar und längsverschiebbar an einem Kapptisch angelenkten Kreissäge bestehen und mit denen besonders gerade, sauber, winkeltreu gesägt werden kann. Dabei sind die Werkstücke am Kapptisch in der vorgesehenen Bearbeitungsposition mit Spannmitteln arretierbar.

Bei diesen Kapp-Sägen handelt es sich um kleinere, stationäre Geräte, die nicht wie Handwerkzeugmaschinen beim Bearbeiten allein von Hand relativ zum Werkstück geführt werden, sondern die mit einer schweren, aufwendigen Führungsmechanik versehen sind. Ohne diese bzw. ohne den Kapptisch sind die Kappsägen nicht als Handwerkzeugmaschine verwendbar.

Es sind Hand-Hubsägen bekannt, die längsgeführt sowie winkelverschwenkbar mit einem Kapptisch verbunden sind und die verhältnismäßig gerade und winkeltreu sägen. Auch diese Sägen sind nicht als selbständiges Handwerkzeug ohne den Kapptisch verwendbar, weil sie unlösbar mit sperrigen, schweren Längsführungselementen verbunden sind.

Es sind für Handhubsägen vorgesehene Gehrungsladen bekannt, die das Sägeblatt der Säge in Führungsschlitzen mit unterschiedlichen, bestimmten Winkellagen gegenüber daran spannbaren Werkstücken führen und bei denen die Gehrungslade und die Handsäge jederzeit voneinander lösbar und unabhängig voneinander verwendbar sind. Die Führungsschlitze sind wegen des notwendigen Querspiels des darin verschiebbar geführten Sägeblatts verhältnismäßig breit, so daß die Geradführung und auch die Winkelgenauigkeit ungenau sind.

### Vorteile der Erfindung

Die erfindungsgemäße Hubsäge mit den kennzeichnenden Merkmalen des Anspruchs 1 hat den Vorteil, daß sie die Vorteile einer kraftgetriebenen Feinschnittsäge zum Bündigsägen mit der einer Kappsäge vereint und daß diese Säge als eigenständiges Handwerkzeug schnell mit dem Kapptisch lösbar verbindbar ist und in Kombination mit dem Kapptisch ein Stationärgerät bildet, mit dem genaue Gehrungs- und Geradschnitte mit unterschiedlich einstellbarem Winkel gesägt werden können.

Ein weiterer Vorteil ist dadurch gegeben, daß der Kapptisch die Hubsäge über einen sehr kleinen, einfachen Mechanismus, eine Wippe, insbesondere mit Drehtisch, schwenkbar aufnimmt, so daß die Hubsäge im Verlauf einer von oben nach unten geführten Schwenkbewegung gegenüber dem Kapptisch präzise geführt ist.

Dadurch, daß die Hubsäge auf einer gefederten schwenkbaren Wippe gelagert ist, ist nach Loslassen von deren Handgriff ein abgefedertes Zurückbewegen in die Neutrallage möglich, in der ein neues Werkstück am Kapptisch arretierbar ist.

Dadurch, daß die die Hubsäge tragende Wippe an einem Drehteller schwenkbar gegenüber dem Kapptisch angeordnet ist, sind Gehrungsschnitte zwischen + 45 und - 45°an großen unhandlichen Werkstücken bequem möglich, weil die Säge gegenüber dem Werkstück bei feststehendem Kapptisch verstellbar ist.

Dadurch, daß der Kapptisch einen Staubabsaugstutzen trägt, und der Drehtisch im Bereich der Werkstück-Auflager mit Absaugschlitzen versehen ist, ist ein staubfreies Sägen möglich.

Dadurch, daß der Drehteller durch Tastendruck entriegelbar ist und nach Loslassen der Taste in festen Winkelpositionen arretiert bzw. in Zwischenpositionen klemmbar ist, sind besonders einfach genaue vorgegebene feste Winkelpositionen zwischen dem Werkstück und dem Sägeblatt für Gehrungsschnitte einstellbar.

Dadurch, daß der Drehteller mittels einer Klemmschraube in beliebigen Schwenkpositionen arretierbar ist, sind zwischen - 45 und + 45 Grad beliebige Winkelpositionen stufenlos sicher einstellbar.

Dadurch, daß der Kapptisch Eingriffsöffnungen für Schraubzwingen trägt, ist er lagesicher gegenüber einer Werkbank arretierbar. Außerdem sind in weitere Eingriffsöffnungen Schraubzwingen zum Festhalten eines Werkstücks gegenüber dem Kapptisch einsetzbar und in unterschiedlichen Positionen spannbar.

Dadurch, daß die Wippe zwei definierte und eine justierbare variable Auflageflächen und zwei dornartige Führungsbolzen trägt, ist die Hubsäge besonders präzise reproduzierbar lagegesichert am Kapptisch anordenbar.

Dadurch, daß der Kapptisch in einer Ausführungsform aus Aluminium besteht und verhältnismäßig breit ausladend gebaut ist, können darauf Werkstücke besonders sicher und lagegenau gespannt und bearbeitet werden, weil der Kapptisch verformungssicher und steif ausgelegt ist und die Gehrungswinkeleinstellung demensprechend exakt ist.

Dadurch, daß der Kapptisch in einer Ausführungsform aus Kunststoff besteht und leicht und schlank gebaut ist, kann er gemeinsam mit der Hubsäge bequem in Arbeitsposition mitgeführt werden und zum Schneiden von langen, unhandlichen Werkstücken verwendet werden in Art einer Rohrsäge, wobei auch besonders kleine Werkstücke sicher darin spannbar und gegenüber dem Kapptisch winkelverstellbar sind.

### Zeichnung

Nachstehend ist an Hand zweier Ausführungsbeispiele die Erfindung mit zugehörigen Zeichnungen näher erläutert.

### Es zeigen

Figur 1 eine räumliche Explosionsdarstellung der Hubsäge mit einem aus Metall bestehenden Kapptisch,
Figur 2 den Kapptisch in räumlicher Explosionsdarstellung,
Figur 3 eine Draufsicht des Kapptischs,
Figur 4 eine Unteransicht des Kapptisches,
Figur 5 einen Querschnitt des Kapptisches mit einem TeilLängsschnitt der Hubsäge,
Figur 6 eine Ansicht des Kapptisches von hinten,
Figur 7 eine Ansicht des Kapptisches von vorn,
Figur 8 einen Querschnitt des Kapptisches an der Befestigungsschraube,
Figur 9 einen Querschnitt des Kapptischs an der Werkzeugklemmvorrichtung für die Hubsäge,
Figur 10 die Draufsicht einer aus Kunststoff bestehenden Variante des Kapptischs mit Hubsäge,
Figur 11 einen Querschnitt des Kapptischs gemäß Figur 10,
Figur 12 eine Seitenansicht des Kapptischs gemäß Figur 10,
Figur 13 eine Unteransicht des Kapptischs gemäß Figur 10,
Figur 14 eine Frontansicht des Kapptischs gemäß Figur 10,
Figur 15 einen Teil-Querschnitt des Kapptischs,
Figur 16 einen Ausschnitt der Überrastvorrichtung am Drehtisch und
Figur 17 eine räumliche Explosionsdarstellung des aus Kunstoff bestehenden Kapptischs.

### Beschreibung der Ausführungsbeispiele

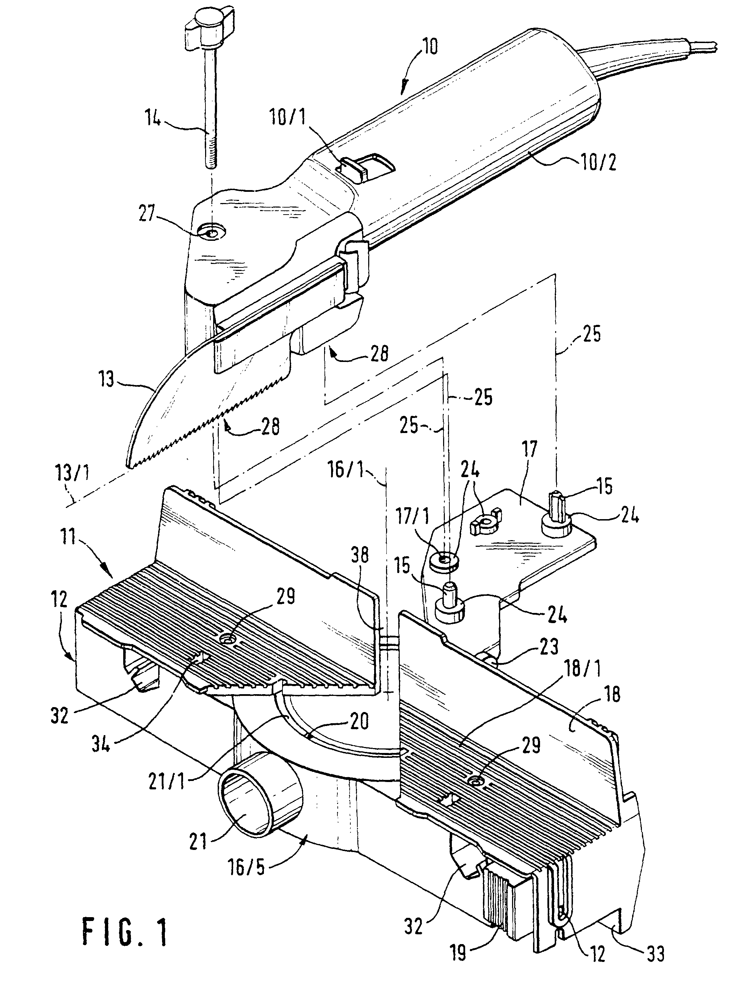

Figur 1 zeigt in räumlicher Darstellung auseinandergezogen eine als Feinschnittsäge ausgestaltete Hubsäge 10 mit einem Gehäuse 10/2 das mit einem Schalter 10/1 versehen ist und die mit einem Kapptisch 11 - entlang der gestrichelt gezeichneten Montageweg-Linien 25 geführt - verbindbar sind. Der Kapptisch 11 besteht aus Aluminium-Druckguß und ist besonders stabil und verformungssicher. Die Hubsäge 10 ist mit einer Flügelschraube 14 mit einer Wippe 17 des Kapptischs 11 lösbar verbindbar. Dazu greifen senkrecht auf der Wippe 17 nach oben stehende, domartige Führungsbolzen 15 in Positionierungslöcher 28 im Gehäuse der Hubsäge 10. In dieser Position durchtritt parallel zu den Führungsbolzen 15 die Flügelschraube 14 mit ihrem Gewindebolzen eine Durchgangsbohrung 27 im vorderen Bereich des Gehäuses der Hubsäge 10. Nach Durchtreten der Hubsäge 10 greift der Gewindebolzen der Flügelschraube 14 in eine Gewindebohrung 17/1 der Wippe 17 und legt die Hubsäge 10 gegenüber der Wippe 17 unverlierbar und spielfrei lagegesichert fest. In dieser Position greift ein Sägeblatt 13, das sich bei Inbetriebsetzen der Hubsäge 10 hin- und hergehend bewegt in einen Sägekanal 38 des Kapptischs 11 durch einen Zwischenraum zwischen einer senkrecht nach oben gerichteten Werkstück-Anlagekante 18 des Kapptischs 11.

Die Wippe 17 ist um eine Drehachse 23 quer zum Sägeblatt 13 an einem Drehtisch 16 auf- und abschwenkbar gelagert befestigt. Der Drehtisch 16 seinerseits ist um eine vertikale Drehachse 16/1 drehbar gelagert, so daß die Wippe 17 gemeinsam mit der daran befestigten Hubsäge 10 und dem Drehtisch 16 in einer horizontalen Ebene zwischen + 45 und - 45° hinund herschwenkbar ist. Der Drehtisch 16 ist von unten in den Kapptisch 11 montiert und wird vom zylindersektorartigen Bereich 16/5 des Kapptischs 11 gehäuseartig umgriffen.

Die Führungsbolzen 15 und die Gewindebohrung 17/1 der Wippe 17 tragen einen bundartigen Bereich mit je einer Auflagefläche 24, auf der sich die Hubsäge 10 in ihrer Montagelage gegenüber der Wippe 17 abstützt. Die drei Auflageflächen 24 bestimmen die definierte horizontale Ausrichtung der Hubsäge 10 gegenüber dem Kapptisch 11.

Der Kapptisch 11 weist auf der der Wippe 17 entgegengesetzten Seite eine Auflagefläche 18/1 sowie eine dazu rechtwinklig nach oben ragende Werkstück-Anlagekante 18 auf, gegen die sich ein auf dem Kapptisch 11 zu sägendes Werkstück abstützen kann. An seinen seitlichen Enden trägt der Kapptisch 11 je eine Eingriffsbohrung 12 zum Einsetzen eines nicht dargestellten Längsanschlags, der zu reproduzierbaren Positionierung mehrerer gleicher gleich zu bearbeitender Werkstücke von Vorteil ist.

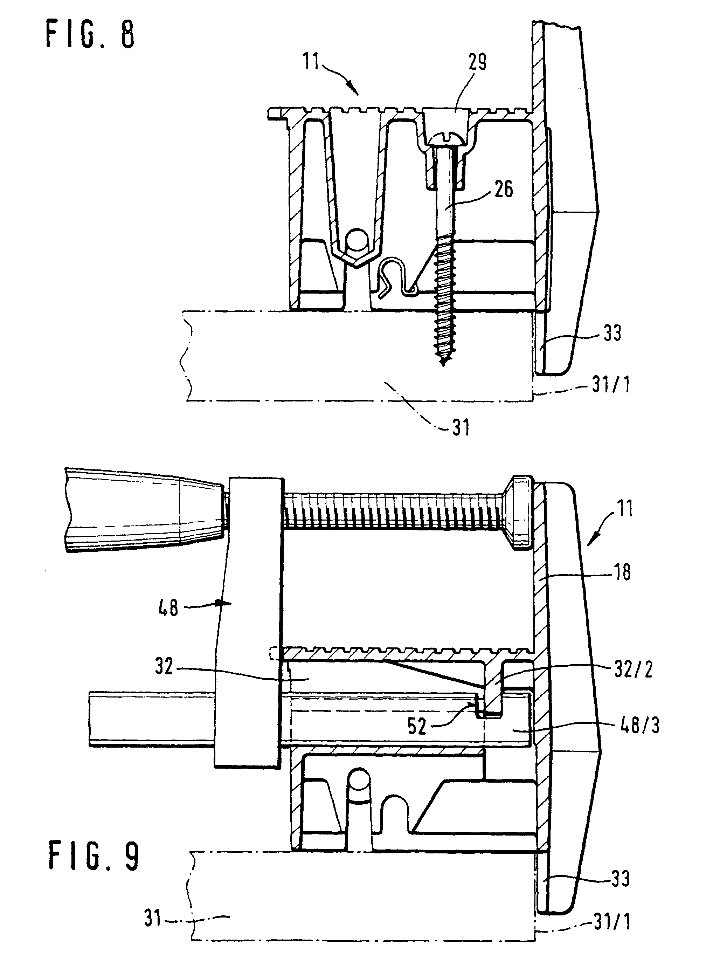

Zwei symmetrisch beabstandet, senkrecht in die Werkstück-Auflagefläche 18/1 hineingeführte Durchgangsbohrungen 29 dienen dem Hindurchstecken von Schrauben 26 (Figur 8) zum fixieren des Kapptisches 11 auf einer Werkbank 31.

Der zylindersektorförmige Bereich 16/5 des Kapptischs 11 hat eine tieferliegende Basisfläche 16/6 sowie zwei einen 90°-Sektor begrenzende Seitenkanten 16/7, die den berührungsfreien Durchtritt des Sägeblatts 13 gegenüber dem Kapptisch 11 sichern. Vorn trägt der Bereich 16/5 einen radial abstehenden Absaugstutzen 21, an den ein Absaugschlauch eines externen Staubabsauggeräts anschließbar ist. Oben auf seinem zylindersektorartigen Bereich 16/5 im Bereich des Sägekanals 38 weist der Kapptisch 11 einen kreisförmig gekrümmten Absaugschlitz 21/1 auf. Dieser Absaugschlitz 21/1 setzt sich kreisförmig mit gleichem Krümmungsradius rückseitig der Werkstück-Anlagekante 18 in Form mehrerer benachbarter Langlöcher fort. Dadurch können hinter und vor der Werkstück-Anlagekante 18 anfallende Sägespäne in jeder Gerhungswinkel-Stellung der Hubsäge 10 entsorgt werden, ohne die Umgebung zu beeinträchtigen.

Im Absaugschlitz 21/1 ist vorn mittig ein Winkelzeiger 20 positioniert, der fest mit dem Drehtisch 16 verbunden ist und dessen Winkelposition gegenüber dem Kapptisch 11 anzeigt.

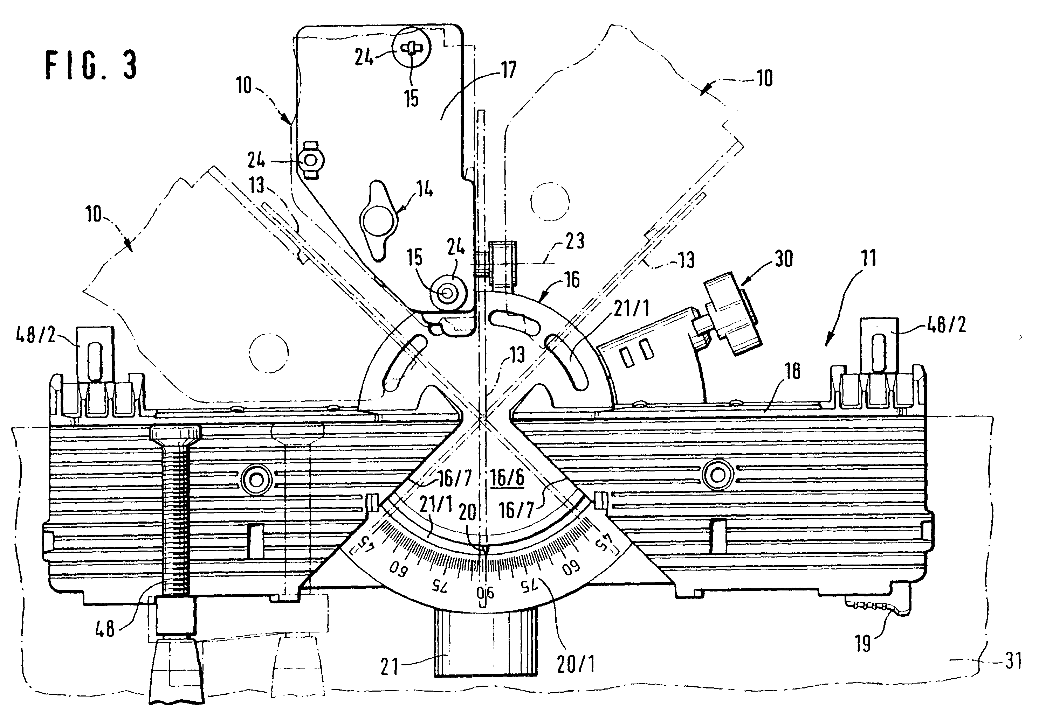

An seiner senkrechten Längsseite trägt der Kapptisch 11 symmetrisch zum Sägekanal 38 je eine Eingriffsöffnung 32 zum Einsetzen einer schraubzwingenartigen Werkstück-Spannvorrichtung 48 (Figuren 3, 7 und 9).

Auf der der Werkstück-Auflagefläche 18/1 gegenüberliegenden Unterseite trägt der Kapptisch 11 in Fortsetzung seiner hinteren Stirnkante zwei nach unten weisende Anschläge 33 zum Abstützen des Kapptischs 11 an einer Werkbankkante 31/1 (Figuren 8, 9).

Ist die Hubsäge 10 am Kapptisch 11 montiert, so klappt sie auf Grund ihrer vorgesehenen Schwerpunktlage mit dem hinteren Bereich ihres als Griff dienenden Gehäuses 10/2 mit der Wippe 17 nach unten, so daß das Sägeblatt 13 mit seiner Sägekante 13/1 schräg über die Oberkante der Werkstück-Anlagekante 18 ragt. Zum Sägen wird der Schalter 10/1 der Hubsäge 10 betätigt und das arbeitsbereite Sägeblatt 13 mit seiner Sägeblattspitze von oben nach unten dadurch bewegt, daß das Gehäuse 10/2 der Hubsäge 10 gemeinsam mit der Wippe 17 um die Drehachse 23 nach oben geschwenkt wird. Ist die parallele Lage der Sägekante 13/1 des Sägeblatts 13 zur Ebene der Werkstück-Auflagefläche 18/1 erreicht, befindet sich die Sägekante 13/1 unterhalb der Werkstück-Auflagefläche 18/1 im Sägekanal 38. Dadurch ist ein vollständiger Trennschnitt eines sich auf der Werkstück-Auflagefläche 18/1 mit beliebigem Gehrungswinkel des Werkstücks möglich.

Soll ein Gehrungsschnitt durchgeführt werden, ist eine Entriegelungstaste 19 gedrückt zu halten, damit der Drehtisch bzw. Drehteller 16 zwischen + 45 und -45° frei drehbar einstellbar ist. Danach wird die Hubsäge 10 gemeinsam mit der Wippe 17 und dem Drehtisch 16 um die Drehachse 16/1 in die gewünschte Winkelposition geschwenkt. Wird die Taste 19 losgelassen und der Drehtisch 16 weitergedreht, rastet er in der nächsten fest vorgegebenen Winkelposition ein. Als Haupt-Rast-Positionen sind nach beiden Seiten zwischen 90° und 45° die Winkel 45°, 60°, 67,5°, 75 ° und 90 ° rastbar vorgegeben. Es sind auch beliebige Winkel des Drehtischs 16 stufenlos einstellbar, indem die Taste 19 gedrückt gehalten wird und zwischen den rastbaren Winkeln in der gewählten Winkelposition des Drehtischs 16 durch Festdrehen einer Klemmschraube 30 (Figur 3) arretiert wird.

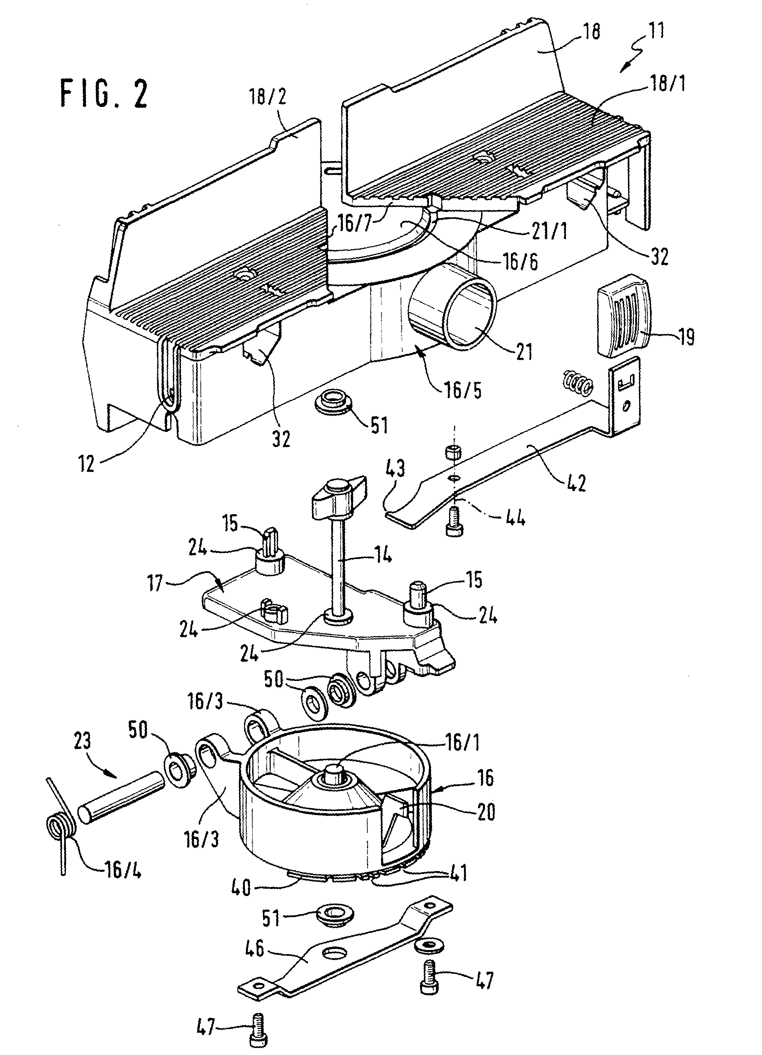

Figur 2 zeigt in einer räumlichen Explosionsdarstellung die wesentlichen Einzelteile des Kapptischs 11 mit seinem kästen- bzw. gehäuseartigen Teil mit dem Absaugstutzen 21, den Absaugschlitzen 21/1, der Werkstück-Auflagefläche 18/1 und der Werkstück-Anlagekante 18, wobei die seitlichen Bohrungen 12 zum Einsetzen je eines nicht dargestellten Längsanschlags und die frontalen Öffnungen 32 zum Einsetzen eines schraubzwingenartigen Werkstückspanners 48 deutlich erkennbar ist. Darauf folgt in Betrachtungsrichtung nach unten ein zweiarmiger Rasthebel 42. Dieser trägt an einem Arm die Entriegelungstaste 19 und stützt sich dort über eine nicht näher bezeichnete Feder in seiner Arretierposition vorgespannt gegenüber dem Kapptisch 11 elastisch ab.

Der Rasthebel 42 hat eine mit der Unterseite des Kapptischs verbindbare Drehachse 44 und einen kürzeren Hebelarm mit einer Rastnase 43, die zum Einrasten in Rastnuten 41 einer Rastscheibe 40 vorgesehen ist. Die Rastscheibe 40 ist an der unteren Stirnseite des Drehtischs 16 drehfest angeordnet. Außerdem trägt der Drehtisch 16 an seinem kreisförmigen Rand eine Ausnehmung, die dem Absaugstutzen 21 zugeordnet ist und die in jeder Winkelposition des Drehtischs 16 den Durchtritt von Spänen und Absaugluft zuläßt. Mittig im Durchbruch ist der Winkelanzeiger 20 angeordnet, der durch den Absaugschlitz 21/1 hindurch erkennbar ist.

Auf seiner der Ausnehmung abgewandten Seite trägt der Drehtisch 16 zwei radial abstehende, lagerbockartige Tragarme 16/3 zur Aufnahme der Drehachse 23 der Wippe 17. Die Drehachse 23 ist mittels sich radial und axial positionierender als Bundbuchsen ausgestalteter Unterlagsscheiben 50 in kreisrunde Durchbrüche der Tragarme 16/3 montiert für ein spielfreies, leichtgängiges Verschwenken der Wippe 17. Mittig zwischen den Tragarmen 16/3 stützt sich zwischen die Wippe 17 und den kreisförmigen Rand des Tellers 16 eine auf die Achse 23 montierte Drehfeder 16/4. Diese dient dem elastischen Dämpfen der beim Loslassen der Hubsäge 10 zusammen mit dieser nach unten kippenden Wippe 17 und verhindert das harte Anschlagen der Wippe 17 am Drehtisch 16 und deren Beschädigung.

Der Drehtisch bzw. -teller 16 ist gemeinsam mit der Rastscheibe 40 im gehäuseartigen Kapptisch 11 mittels eines die untere Stirnfläche quer übergreifenden Trägers 46 unverlierbar am Kapptisch 11 drehbar festgehalten. Der Träger 46 ist mittels zweier Schrauben 47 mit der Unterseite des Kapptisches 11 verschraubbar. Die Drehachse 16/1 des Drehtellers 16 wird über Zwischenringe 51 leichtgängig drehbar am Kapptisch 11 gehalten.

Die Wippe 17 trägt auf ihrer Oberseite nahe ihrer Drehachse 23 den runden Führungsbolzen 15 zur Positionierung der Hubsäge 10. Der andere am hinteren Ende der Wippe 17 angeordnete Führungsbolzen 15 ist unrund, um Überbestimmungen der Sägenlage zu verhindern zur Begrenzung ihres Freiheitsgrades Rotation. Der seitlich am weitesten außenliegende Bund 24 ist mittig mit einem nicht näher bezeichneten Schraubenloch versehen, das zum Einsetzen einer Justierschraube dient, an der sich die Hubsäge 10 abstützt und mit der der exakte 90°-Position des Sägeblattes 13 gegenüber der Werkstück-Auflagefläche 18/1 einstellbar ist. Damit sind eventuelle Ungenauigkeiten am Gehäuse der Hubsäge 10 im Bereich der Wippe 17 des Kapptischs 11 ausgleichbar.

Die Werkstück-Anlagekante 18 ist in ihrem Bereich nahe dem Sägekanal 38 oben als überstehende Sicherheitsrippe 18/2 ausgebildet und begrenzt die Position für die Hand des Bedienenden, falls dieser entgegen der Bedienungsanleitung das Werkstück von Hand halten sollte. Damit soll einem Abrutschen der Hand des Bedienenden in dem Bereich des Sägekanals 38 entgegengewirkt werden.

Figur 3 zeigt eine Draufsicht auf den Kapptisch 11, dessen Einzelheiten mit denen der Figuren 1 und 2 übereinstimmen und dementsprechend gleiche Bezugszeichen haben, ohne daß sie nochmals gesondert erläutert sind. Über die vorhergehenden Figuren hinaus ist die Klemmschraube 30 gezeigt, die sich sich beim Spannen mit ihrem Bolzenende am Zylindermantel des Drehtisches 16 abstützt. Die Klemmschraube 30 hat am Ende ihres Schafts einen Gummipuffer, mit dem sie in entsprechender Spannposition den Drehteller 16 in seiner stufenlosen Winkelposition sanft arretieren kann.

Deutlich ist auch die Fortsetzung des Absaugschlitzes 21/1 auf der der Wippe 17 zugewandten Seite der Werkstück-Anlagekante 18 in Gestalt mehrerer benachbarter langlochartiger Löcher. Da sich die Absaugschlitze 21/1 vor und hinter der Werkstück-Anlagekante 18 erstrecken, werden die Sägespäne auf beiden Seiten des Werkstücks bzw. auf beiden Seiten des eingebrachten Sägeschlitzes abgesaugt. Damit wird eine gründliche vollständige Entsorgung der Sägespäne erreicht.

Darüberhinaus trägt der Kapptisch 11 schraubzwingenartige Werkstückspanner 48, die in die Eingriffsöffnungen 32 in der Stirnseite des Kapptisches 11 einsetzbar und um die Mitte der Eingriffsöffnungen 32 schwenkbar gelagert sind.

Auf der der Wippe 17 zugewandten rückwärtigen Stirnseite des Kapptischs 11 sind in weitere Eingriffsöffnungen 32/1 Schraubzwingen 48/2 zum Festspannen des Kapptischs 11 auf einer Werkbank 31 eingesetzt. Außerdem trägt ein dem Winkelanzeiger 20 benachbarter Bereich des Absaugkanals 21/1 eine kreisbogenförmige Winkelskala 20/1 zur Kontrolle des Gehrungswinkels.

Die Hubsäge 10 ist gestrichelt gezeichnet in den zwei äußersten 45°-Schwenkpositionen und mit durchgehenden Linien in der 90°-Position gegenüber dem Kapptisch 11 dargestellt, wobei die entsprechenden Lagen des Sägeblatts 13 gegenüber der Skala 20/1 deutlich sind. Hier wird nochmals klar, daß der sich unterhalb der Sägekante 13/1 befindliche Bereich des zylindersektorförmigen Bereichs 16/5 des Kapptischs 11 eine tieferliegende Basisfläche 16/6 sowie zwei einen 90°-Sektor begrenzende Seitenkanten 16/7 hat. Auch hinter der Werkstück-Anlagekante 18 ist der den Drehteller 16 überdeckende Bereich des Kapptischs 11 "tiefergelegt" auf dem Niveau der Basisfläche 16/6 und bildet eine halbkreisförmige Fläche.

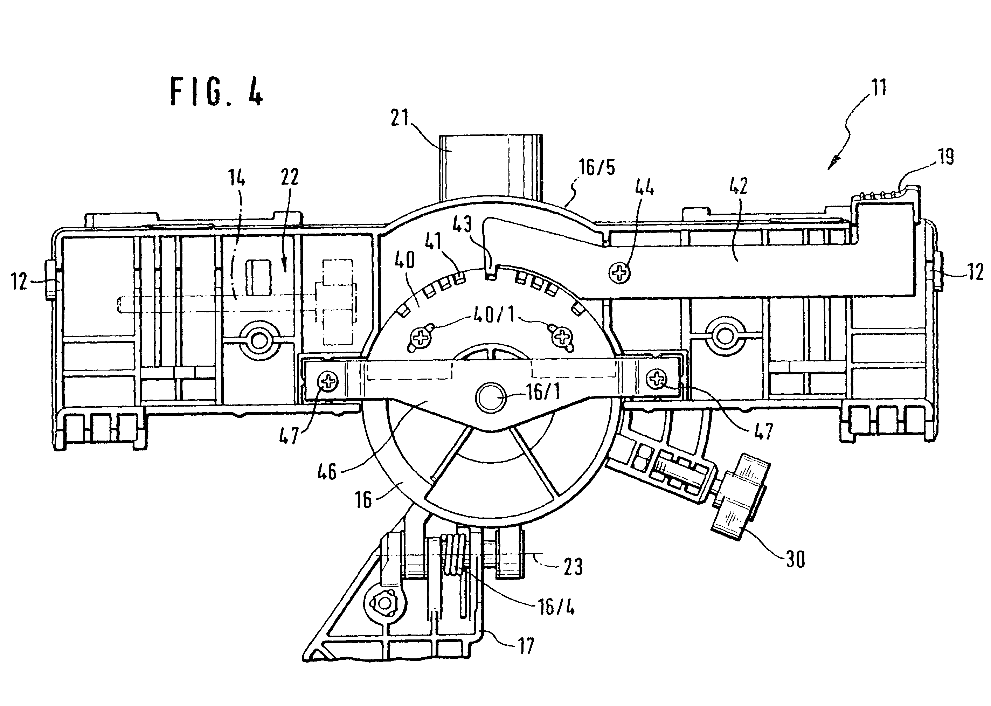

Figur 4 zeigt die Ansicht des Kapptischs 11 von unten mit den wesentlichen zuvor erläuterten Einzelheiten und Bezugszeichen und insbesondere die Einbaulage des Rasthebels 42 mit der Taste 19, dessen Drehachse 44 und Rastnase 43 in Eingriff mit den Rastnuten 41 der scheibensegmentartigen Rastscheibe 40 sowie die Position des Trägers 46, der mit zwei Schrauben 47 am Kapptisch 11 befestigt ist. Gezeigt ist auch die Position der die Wippe 17 stützenden Drehfeder 16/4 und ein an der Unterseite des Kapptisches 11 durch in Gußrippen eingebrachte Nuten gebildetes Depot 22 für die Flügelschraube 14 bei Nichtgebrauch des Kapptisches 11.

Deutlich erkennbar ist, daß die Rastscheibe 40 über Langlöcher 40/1 gegenüber dem Drehteller 16 verschraubt ist mit nicht näher bezeichneten Kreuzschlitzschrauben. Daher kann durch Relativdrehung des Drehtellers gegenüber der Rastscheibe 40 im gelösten Zustand der in den Langlöchern 40/1 sitzenden Schrauben die Position des Winkelanzeigers 20 gegenüber der Skala 20/1, vorteilhafterweise in der 90°-Position des Sägeblatts 13, justiert werden.

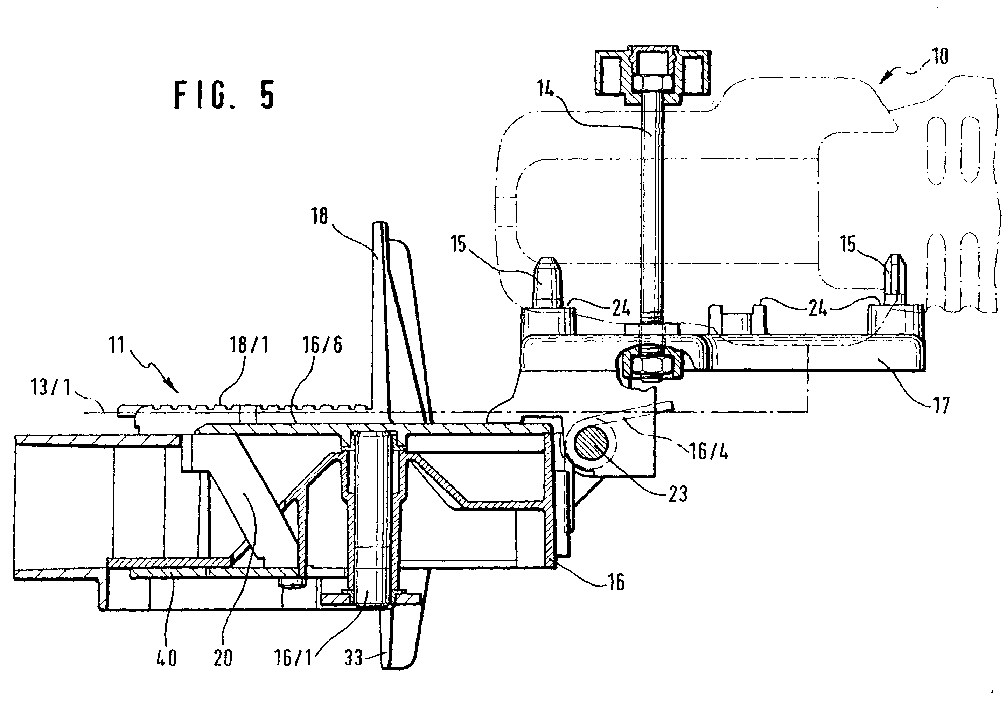

Figur 5 zeigt den Querschnitt des Kapptischs 11 im Bereich der Drehachse 16/1 des Drehtellers 16, wobei die Rastscheibe 40 mit dem darauf geschweißten Winkelzeiger 20 erkennbar ist, womit der Justiervorgang zwischen der Rastscheibe 40 und dem Drehteller 16 zum Einstellen der tatsächlichen 90° Winkellage des Sägeblatts 13 der Hubsäge 10 verständlich ist.

Gezeigt ist auch der Verlauf der Sägekante 13/1 unterhalb der Oberkante der Werktstück-Auflagefläche 18/1 bzw. oberhalb der Basisfläche 16/6, womit verständlich ist, daß in dieser Position des Sägeblatts 13 der Hubsäge 10 ein sich auf der Werkstück-Auflagefläche 18/1 abstützendes Werkstück vollständig durchsägbar ist.

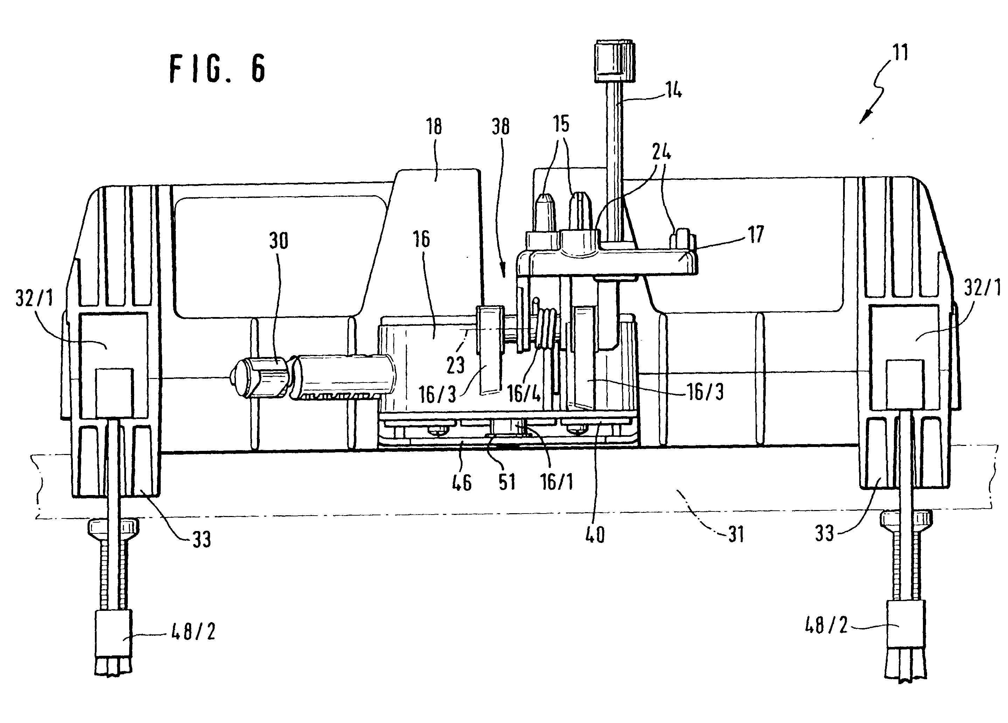

Figur 6 zeigt den Kapptisch 11 von der Maschinenseite aus gesehen, wobei die zuvor erwähnten Teile aus anderer Blickrichtung erkennbar sind, insbesondere die Eingriffsöffnungen 32/1 für die Schraubzwingen 48/2 zum Festklemmen des Kapptisches 11 an der Werkbank 31 in Anschlaglage der Anschläge 33 an der Stirnseite der Werkbank 31.

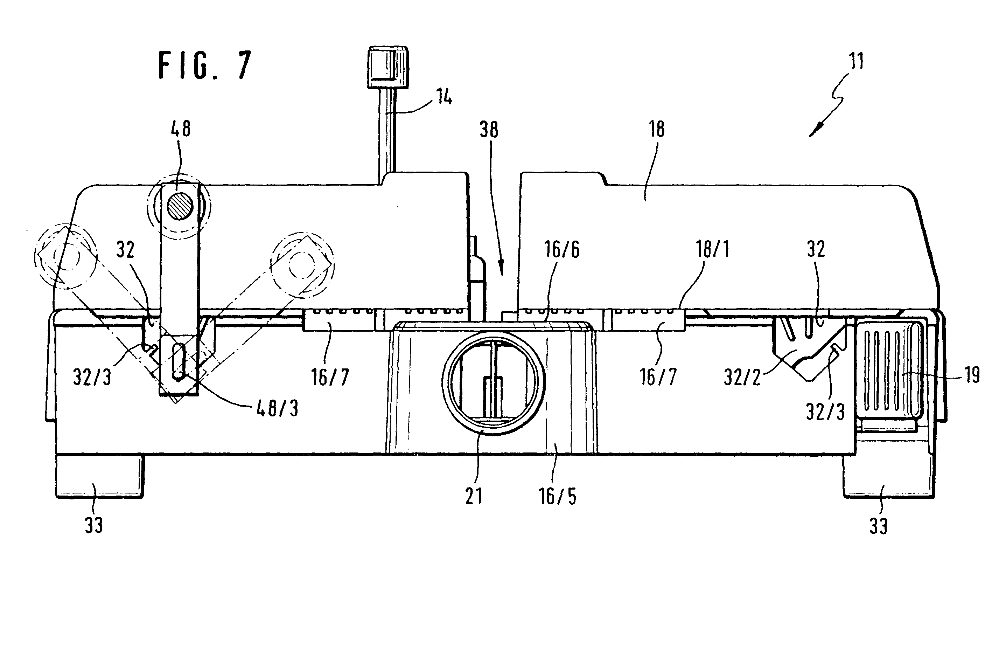

Figur 7 zeigt die Frontansicht des Kapptisches 11, wobei schon zuvor erläuterte Einzelheiten erkennbar und mit entsprechenden Bezugszeichen versehen sind. Deutlich gezeigt ist die v-förmige Kontur der Eingriffsöffnungen 32. In diese kann je ein schraubzwingenartiger Werkzeugspanner 48 eingesetzt werden - wie ein Schlüsselbart in einem Schlüsselloch verriegelbar. Dadurch ist der Werkzeugspanner 48 in den gezeigten Schwenkpositionen gegen ein Werkstück bzw. gegen die Werkstück-Anlagekante 18 abstützbar. Axial in die Öffnungen 32 hineingeschoben - in Betrachtungsrichtung in die Zeichenebene hinein - befinden sich die Steckachsen 48/3 (Fig. 9) der Werkzeugspanner 48 in ihrer axialen Anschlaglage gegenüber im Kapptisch 11, wobei zuvor diese Steckachsen 48/3 an den Sperrippen 32/2 und 32/3 vorbei geführt worden sind - in der rechten Eingriffsöffnung 32 rechts bzw. in der linken Eingriffsöffnung 32 links anschlagend. Dadurch sind die Steckachsen 48/3 axial gesichert durch Eingriff von Ausnehmungen 52 (Fig. 9) hinter die Sicherungsrippen 32/2. Dadurch wird ein unbeabsichtigtes Lösen der Werkstückpsanner 48 bei hohem Spanndruck ausgeschlossen. Der Werkzeugspanner 48 ist in den in Figur 7 gezeigten drei unterschiedlichen Schwenkpositionen axial gesichert in der Lage, ein Werkstück gegen die Werkstück-Anlagekante 18 zu drücken und dessen auflagesichere Bearbeitung zu erlauben.

Figur 8 zeigt den Querschnitt des Kapptischs 11 im Bereich der Schraubendurchgangsbohrung 29, in die eine Holzschraube 26 eingeschoben und mit der Tischplatte einer Werkbank 31 verschraubt ist. Dabei stützt sich die Anschlagkante 33 des Kapptischs 11 an die Werkbankkante 31/1 und wirkt für den Kapptisch 11 zusätzlich lagesichernd gegenüber der Werkbank 31.

Der in Figur 9 gezeigte Querschnitt des Kapptischs 11 verdeutlicht die Ausgestaltung der Steckachse 48/3 des Werkzeug-Spanners 48, wobei deutlich wird, die schlüsselbartartige Ausgestaltung durch eine Nut 52 in der Steckachse 48/3 die in entsprechender Drehposition gegenüber der Sicherungsrippe 32/2 in der Eingriffsöffnung 32 axial gesichert ist.

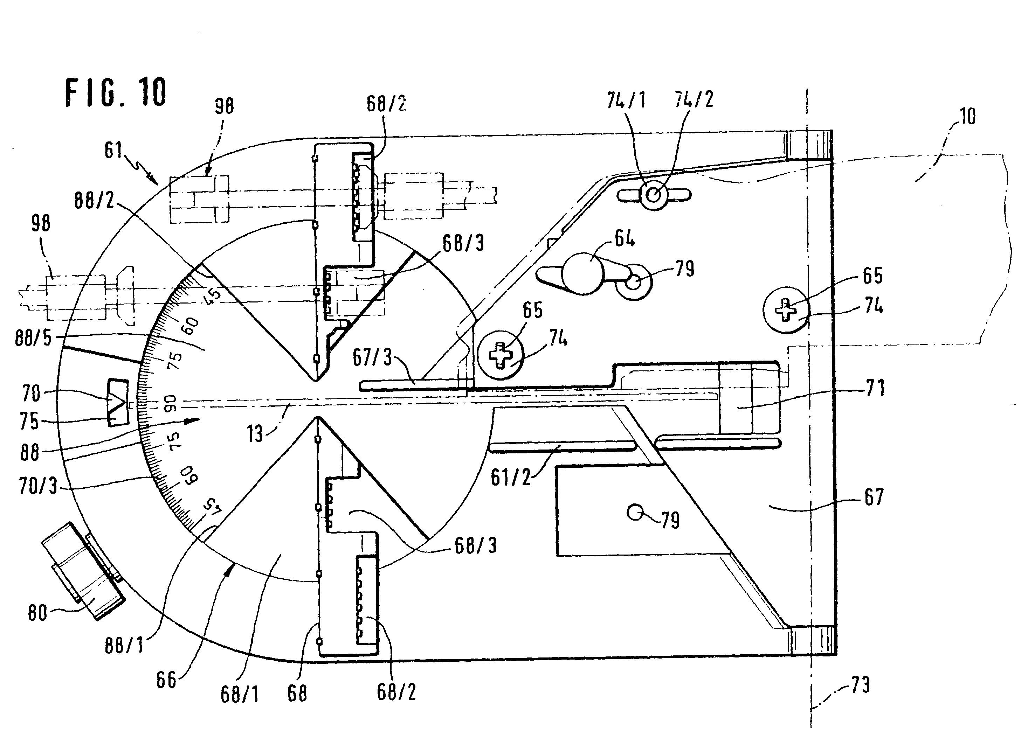

Die Figuren 10 bis 16 zeigen Ansichten eines weiteren Ausführungsbeispiels eines Kapptischs 61 aus Kunststoff, der auch für nicht stationäre Sägezwecke an der Hubsäge 10 mitführbar geeignet ist.

Der Kapptisch 61 weist, wie der Aluminium-Druckguß-Kapptisch 11 gemäß den Figuren 1 bis 9 ebenfalls eine Wippe 67 auf. Diese ist im Aufnahmebereich der Hubsäge 10 ebenso ausgestaltet ist wie die Wippe 17 gemäß den Figuren 1 bis 9. Die Wippe 67 trägt auf ihrer der Hubsäge 10 zugewandten Seite zu deren Aufnahme, zwei weit auseinanderliegende domartige Führungsbolzen 65 sowie außerhalb einer Verbindungslinie zwischen den Führungsbolzen 65 eine drehfest eingesetzte Mutter, die als Gewindebohrung 67/1 für eine Flügelschraube 64 dient, mit der die Hubsäge 10 gegenüber der Wippe 67 spielfrei fixierbar ist.

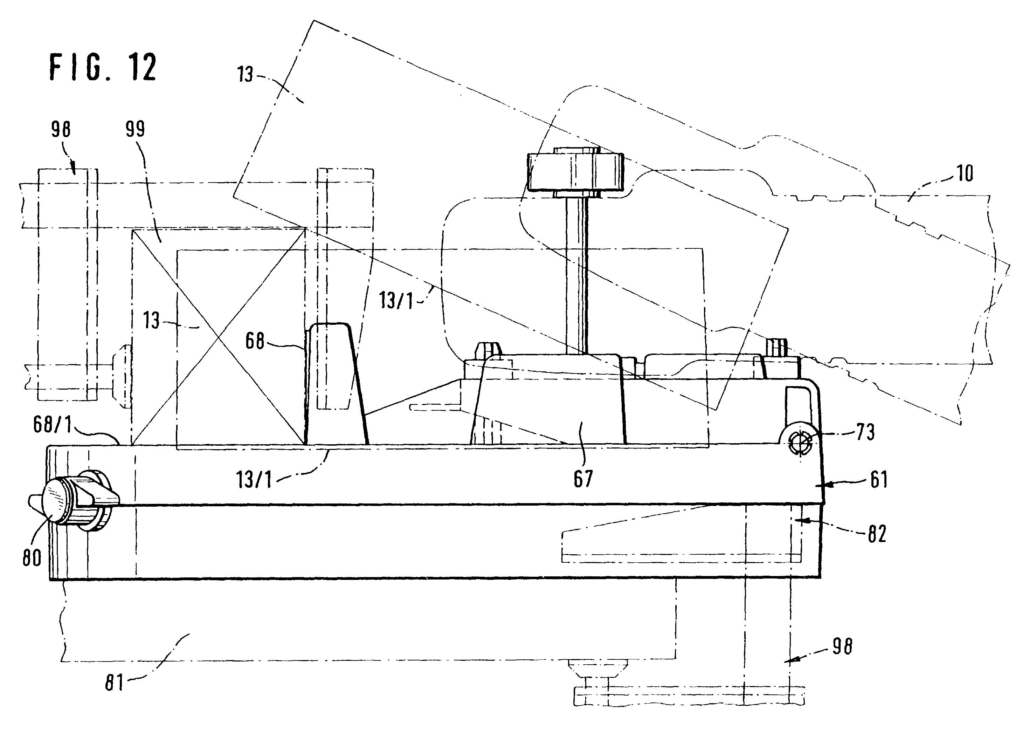

Die Hubsäge 10 stützt sich in der Montagelage mit ihrer Unterseite gegenüber den die Führungsbolzen 65 bundartig umgebenden Auflageflächen 74 ab, wobei als justierbare Auflagefläche am äußersten Rand der Wippe 67 in Betrachtungsrichtung oben ein weiterer Bund 74/1 angeordnet ist, mit einer Gewindebohrung 74/2 zur Aufnahme einer nicht dargestellten Justierschraube, die einen Auflagepunkt der Hubsäge 10 bildet. Durch unterschiedlich weites Einschrauben der Justierschraube ist das Sägeblatt 13 rechtwinklig gegenüber der Oberseite des Kapptischs 61 justierbar. Die Wippe 67 trägt etwa mittig eine Ausnehmung 71 auf, die als Spandurchlaßkanal bzw. Sägespandepot dient. Die Draufsicht zeigt außerdem zwei Bohrungen 79 im Boden des Kapptisches 61 zum Durchtritt von Holzschrauben zur Befestigung des Kapptisches 61 auf einer Unterlage z. B. Werkbank 81 (Figur 12). Die Wippe 67 trägt in ihrem vorderen Bereich eine nach vorn weisende Sicherheitsrippe 67/3, die gemeinsam mit der fest am Kapptisch 61 angeordneten zweiten Sicherheitsrippe 61/2 verhindert, daß der die Hubsäge 10 mit Kapptisch 61 Bedienende mit seinen Fingern in den Bereich des Sägeblatts 13 gelangt. Im Unterschied zum Kapptisch 11 trägt der Kapptisch 61 die Drehachse 73 zum Auf- oder Abschwenken der Wippe 67 weit entfernt vom Drehteller 66 an seiner äußersten Hinterkante, wobei sich die Drehachse 73 über die gesamte Breite des Kapptischs 61 erstreckt. Dabei stabilisiert die große Führungslänge der Drehachse 73 die Wippe 67 gegenüber dem Kapptisch 61.

Der Drehtisch 66 trägt senkrecht nach oben weisend eine Werkstück-Anlagekante 68 und eine in der Zeichenebene liegende Werkstück-Auflagefläche 68/1 zur Aufnahme eines Werkstücks 99 (Figur 12), das gegenüber der Werkstück-Anlagekante 68 mittels Schraubzwinge 98 festklemmbar ist, die in zwei verschiedenen möglichen Ansatzpositionen an der Werkstück-Anlagekante 68 gezeigt sind. Die Werkstück-Anlagekante 68 dient zugleich als Handgriff zum Voreinstellen der Winkelposition des Drehtischs 66.

Die Schraubzwingen 98 können ebenso in die symmetrisch zur Fluchtungslinie des Sägeblatts 13 angeordneten Ausnehmungen 68/2 und 68/3 eingehängt bzw. abgestützt werden.

Die Werkstück-Anlagekante 68 weist einen Zwischenraum zum Durchtritt des Sägeblatts 13 auf, durch den hindurch ein Sägekanal 88 verläuft, der durch zwei Stufenkanten 88/1, 88/2 begrenzt wird, die eine tieferliegende Basisebene 88/5 des Drehtischs 66 begrenzen, die eine Winkelskala trägt, die sich von 90° bis + - 45° erstreckt. Die Winkelskala 70/3 ist einem Winkelzeiger 70 zugeordnet, der justierbar in einem Durchbruch 75 des Kapptisches 61 sitzen.

Über eine Klemmschraube 80 ist die Winkelposition des Drehtischs 66 stufenlos klemmbar, für den Fall, daß außerhalb der überrastbaren Winkelpositionen 90°, + - 75°, + - 67,5°, + - 60°, + - 45° gesägt werden soll.

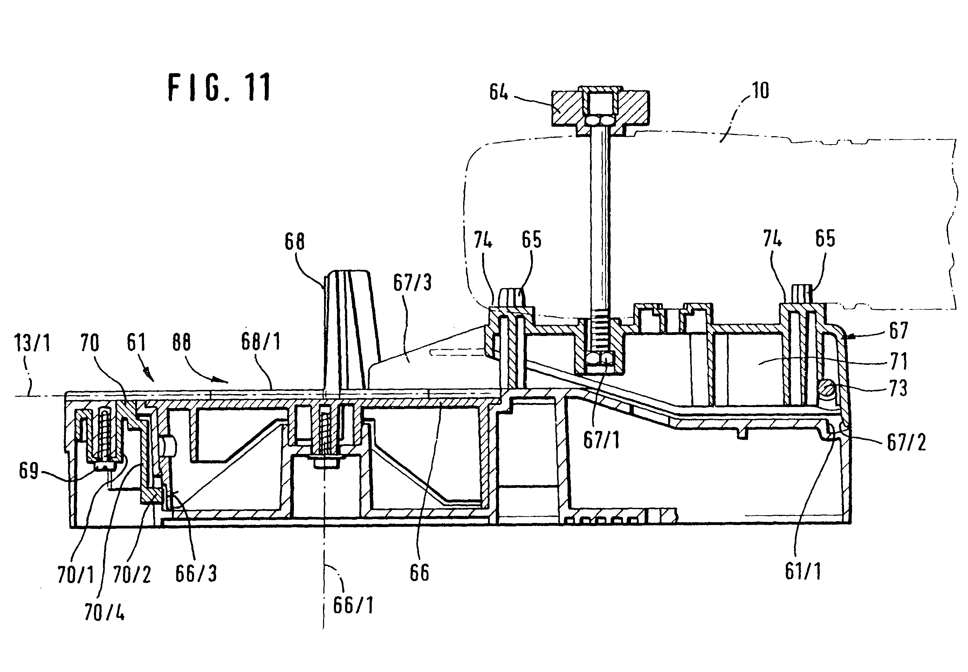

Der Drehtisch 66 ist um eine Drehachse 66/1 (Figur 11) gegenüber dem Kapptisch 61 drehbar.

Figur 11 zeigt den Querschnitt des Kapptischs 61, wobei die Anordnung der Hubsäge 10 gegenüber den Führungsbolzen 65 und den Auflageflächen 74 besonders deutlich wird und daß eine axial in der Wippe 67 gesicherte Mutter 67/1 die Gewindebohrung für die Flügelschraube 64 enthält. Die um die Drehachse 73 schwenkbare Wippe 67 trägt an ihren dem Drehtisch 66 zugewandten freien Ende eine Sicherheitsrippe 67/3, die die Finger des Bedienenden vor Verletzungen am Sägeblatt der Hubsäge 10 schützen soll, indem die Unterkante der Sicherheitsrippe 67/3 tiefer angeordnet ist als die Sägeblattunterkante 13/.

Deutlich ist auch die gegenüber der Werkstück-Anlagekante 68 rechtwinklig verlaufende Werkstück-Auflagefläche 68/1 sowie der Verlauf des Sägekanals 88. Außerdem ist erkennbar, daß die Sägekante 13/1 des Sägeblatts der Hubsäge 10 in der Endposition der Hubsäge 10 (Durchsägestellung) unterhalb der Werkstück-Auflagefläche 68/1 liegt, damit das vollständige Durchtrennen eines aufliegenden Werkstücks gesichert ist.

Darüber hinaus ist auf der in Betrachtungsrichtung linken Seite des Kapptischs 61 der Zeigerkörper 70/1 des Winkelzeigers 70 erkennbar, der mittels einer Klemmschraube 69 gegenüber dem Kapptisch 61 klemmbar ist. Der Zeigerkörper 70/1 trägt auf seiner dem Drehteller 66 zugewandten Seite an einer federnden Zunge 70/4 einen Nocken 70/2. Der Überrastnokken 70/2 greift überrastend in eine Rastausnehmung 66/3 im Außenrand des Drehtischs 66, so daß dieser überrastend gegenüber dem Kapptisch 61 verdrehbar ist.

Die Wippe 67 trägt nahe dem Bereich der Drehachse 63 eine Anschlagkante 67/2 zur Begrenzung der Schwenkbewegung der Wippe gegenüber dem Kapptisch 61 und zum Anschlagen an eine Gegenkante 61/1 des Kapptisch 61 um den Öffnungswinkel der Wippe 67 gegenüber dem Kapptisch zu begrenzen.

Der in Figur 12 gezeigte Querschnitt des Kapptischs 61 mit dem gestrichelt gezeichneten Längsschnitt der Hubsäge 10 zeigt dessen Befestigung an einer Werkbank 81 mittels Schraubzwingen 98, die in dafür vorgesehene Ausnehmungen 82 der hinteren Stirnseite des Kapptischs 61 eingreifen können. Ein Werkstück 99 ist an den Werkstück-Auflageebenen 68/1, 68 mittels einer Spannzwinge 98 geklemmt, die sich an der Rückseite der Werkstück-Anlagekante 68 festhält.

Die Anordnung des Sägeblatts 13 der Hubsäge 10 ist sowohl vor dem Sägen als auch nach dem Durchtrennen des Werkstücks 99 dargestellt. Vor dem Sägen erstreckt sich die Sägekante 13/1 oberhalb der Werkstück-Oberkante des Werkstücks 69, danach im Sägekanal 88 parallel zur Werkstück-Auflagefläche 68/1.

In Betrachtungsrichtung links, d. h. seitlich vorn am Kapptisch 61, ist die Klemmschraube 80 zum Arretieren stufenloser Winkelpositionen des Drehtellers 66 erkennbar.

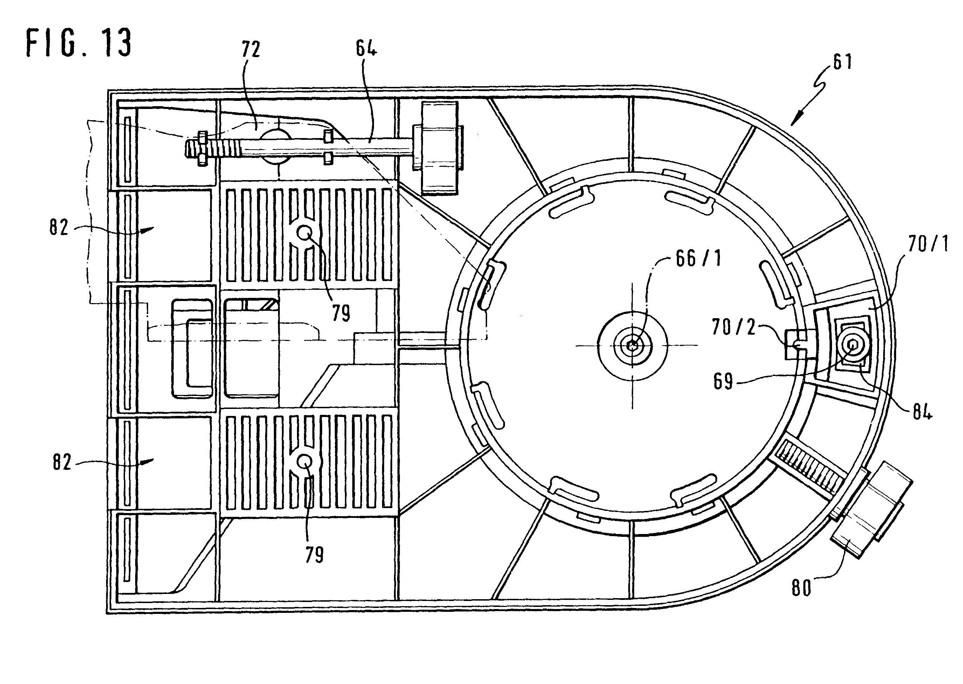

Figur 13 zeigt die Unteransicht des Kapptischs 61 mit den Eingriffsöffnungen 82 zum Einschieben von Schraubzwingen 98, den Bohrungen 79 zum Durchtritt von Befestigungsschrauben zum Befestigen des Kapptisches 61 an einer festen Unterlage, einem Depot 72 zur sicheren Aufbewahrung einer Flügelschraube 64 bei Nichtgebrauch des Kapptisches 61 bzw. zum Aufbewahren einer Reserve-Flügelschraube 64.

In Betrachtungsrichtung rechts ist der Zeigerkörper 70/1 mit dem Überrastnocken 70/2 erkennbar, der den Rand des Drehtellers durch Eingriff in Rastausnehmungen 66/3 des Drehtellers 66 diesen in vorbestimmten Winkelpositionen festhalten. Dabei ist deutlich, daß der Zeigerkörper 70/1 ein konzentrisch zur Drehachse 66/1 verlaufendes Langloch 84 aufweist, durch das hindurch die Befestigungsschraube 69 zum Festhalten des Zeigerkörpers 70/1 hindurchgesteckt ist. Nach Lösen der Befestigungsschraube 69 kann der Zeigerkörper 70/1 in Längsrichtung des Langlochs 84 verstellt werden, womit gleichzeitig die Rastpositionen des Drehtischs 66 verschoben werden, so daß also damit die Justierung des Drehtischs 66 gegenüber der Ebene des Sägeblattes 13 vorgenommen werden kann.

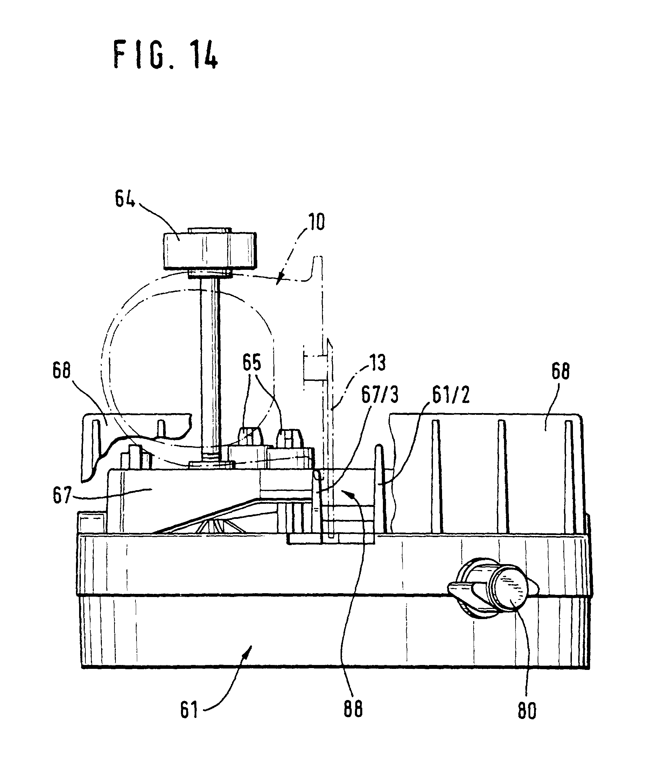

Figur 14 zeigt die Frontansicht des Kapptischs 61 mit der Klemmschraube 80, wobei nur der rechte Bereich der Werkstück-Anlagekante 68 gezeigt ist und deren linker Bereich zwecks Vorderansicht der Wippe 67 zeichnerisch weggebrochen ist. Dabei wird die Befestigungsart der Hubsäge 10 auf der Wippe 67 auf den Führungsbolzen 65 erkennbar und der mittig durch den Zwischenraum zwischen der Werkstück-Anlagekante 68 verlaufende Sägekanal 88 deutlich. Außerdem ist die Relativlage des Sägeblatts 13 gegenüber den Sicherheitsrippen 67/3 und 61/2 erkennbar.

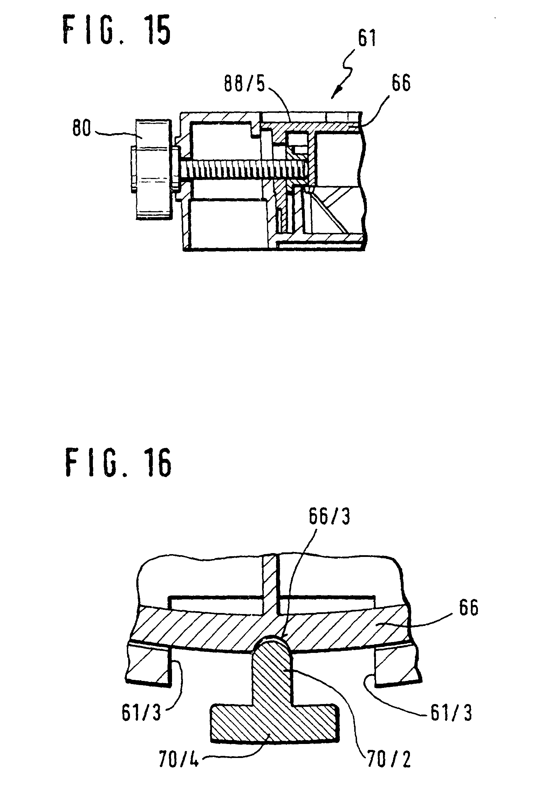

Figur 15 zeigt ausschnittsweise die Klemmschraube 80 in ihrer Position gegenüber dem Kapptisch 61 längsgeschnitten in ihrer Abstützposition mit dem Ende ihres Gewindebolzens gegenüber dem Außenrand des Drehtellers 66. Dieser wird durch ein geriffeltes, bogenförmiges Halteblech mittels Klemmschraube 80 gegen die Innenwand des Drehtellerbundes gezogen und gegen Verdrehen gesichert .

Figur 16 zeigt eine vergrößerte Darstellung des Überrastnokkens 70/2 des Zeigerkörpers 70/1 als Einzelheit in seiner Rastposition gegenüber der Rastöffnung 66/3 im Rand des Drehtischs 66. Außerdem ist der Verstellbereich des Rastnokkens 70/2 entlang dem Langloch des Zeigerkörpers 70/1 im Zwischenraum eines Durchbruchs von Wandungen des Kapptischs 61 erkennbar, die den Drehtisch 66 gehäuseartig aufnehmen und die Durchbruchränder 61/3 bilden.

Der wesentliche Unterschied des Kapptisches 61 gegenüber dem Kapptisch 11 besteht darin, daß hier das Werkstück 99 gegenüber der Hubsäge 10 zu verstellen ist und nicht wie bei dem Kapptisch 11 die Hubsäge 10 gemeinsam mit der Wippe 17 gegenüber dem Werkstück verstellbar ist. Hier nimmt der Drehtisch 66 das Werkstück 99 auf, während gemäß den Figuren 1 bis 9 der Drehtisch 16 die Wippe 17 der Hubsäge 10 schwenkbar bzw. winkelverstellbar trägt.

Da der Kapptisch 61 aus Kunststoff besteht, ist er leicht und zum mobilen Einsatz, beispielsweise zum Schneiden von Gehrungsschnitten an langen stangenartigem Material bzw. freiliegenden Stangen - ähnlich wie mit einer Rohrsäge - besonders geeignet.

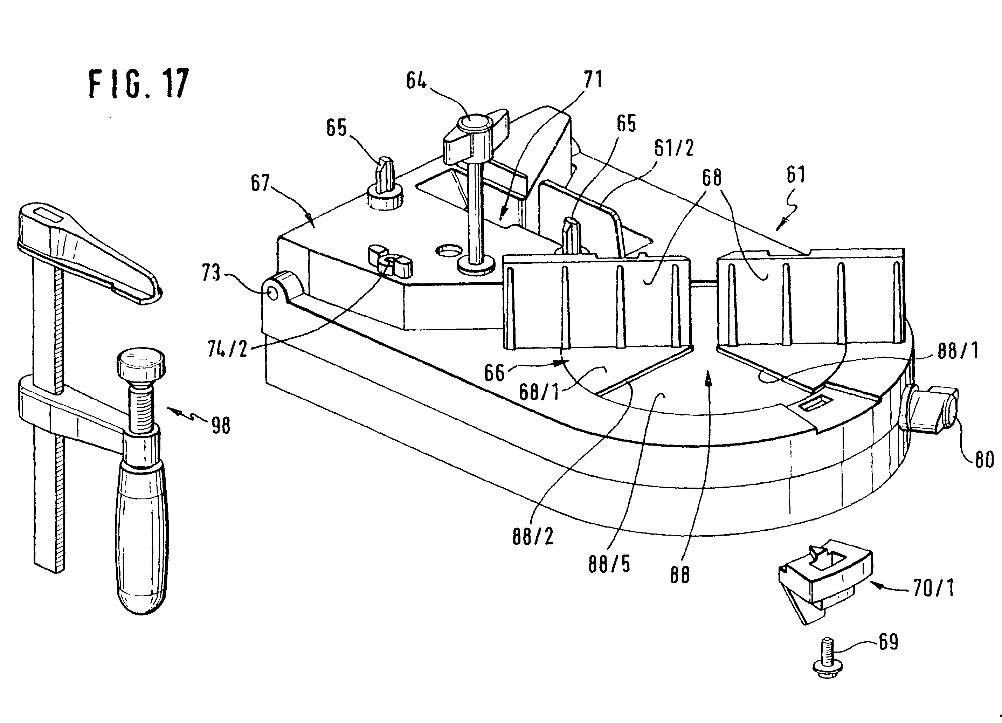

Figur 17 zeigt die räumliche Explosionsdarstellung des Kapptischs 61 aus Kunststoff für die Hubsäge 10 gemäß den Figuren 10 bis 16 und erleichtert damit das Verständnis für die Erfindung, ohne daß nochmals auf die darin eingezeichneten Bezugszeichen eingegangen wird, die mit den Bezugszeichen der Figuren 10 bis 16 übereinstimmen und in der zugehörigen Beschreibung zuvor eingehend erläutert worden sind.

## Patentansprüche

1. Kraftgetriebene Hubsäge (10) mit einem Sägeblatt (13) und mit einem Kapptisch (11, 61), wobei die Hubsäge lösbar mit dem Kapptisch (11, 61) verbindbar ist, an dem sie gegenüber einem daran spannbaren Werkstück (99) sägend, insbesondere parallel zum Sägeblatt (13), geführt verstellbar ist und mit dem mittels Drehtisch (16, 66) der Winkel zwischen dem Werkstück und dem Sägeblatt (13) der Hubsäge (10), insbesondere zum Gehrungssägen, verstellbar ist, **dadurch gekennzeichnet, daß** die Hubsäge als Feinschnittsäge (10) zum Bündigsägen von Werkstücken ausgestaltet ist und der Kapptisch (11, 61) eine Wippe (17, 67) trägt, an der die Hubsäge (10) justierbar zu fixieren ist und wobei die Wippe (17, 67) zwei definierte und eine justierbare variable Auflageflächen (24) und zwei dornartige Führungsbolzen (15) zur Aufnahme der Hubsäge trägt, so dass die Hubsäge präzise reproduzierbar lagegesichert am Kapptisch anordenbar ist.

2. Hubsäge nach Anspruch 1, **dadurch gekennzeichnet, daß** die Wippe (17, 67) um eine quer zum Sägeblatt (13) verlaufende Drehachse (23, 73) schwenkbar, den Vorschub der Hubsäge (10) bestimmend, gelagert ist.

3. Hubsäge nach einem der vorhergehenden Ansprüche, **dadurch gekennzeichnet, daß** der Drehtisch (16) die Drehachse (23) mit der Wippe (17) trägt.

4. Hubsäge nach einem der vorhergehenden Ansprüche, **dadurch gekennzeichnet, daß** der Drehtisch (16, 66) sowohl in beliebigen Winkelpositionen stufenlos klemmbar als auch in bestimmten Winkelpositionen rastbar, insbesondere überrastbar, einstellbar ist.

5. Hubsäge nach einem der vorhergehenden Ansprüche, **dadurch gekennzeichnet, daß** Rastpositionen des Drehtischs (16, 66) gegenüber dem Kapptisch (11, 61) justierbar einstellbar sind.

6. Hubsäge nach einem der vorhergehenden Ansprüche, **dadurch gekennzeichnet, daß** der Kapptisch (11) an seiner Vorderseite eine Taste (19) trägt zum Lösen der Rastverbindung zwischen dem Drehtisch (16) und dem Kapptisch (11).

7. Hubsäge nach einem der vorhergehenden Ansprüche, **dadurch gekennzeichnet, daß** der Kapptisch (11) einen Staubabsaugstutzen (21) trägt, von dem aus über Absaugschlitze (21/1) beiderseits eines Sägeschlitzes, d.h. vor und hinter einem am Kapptisch positionierten, insbesondere gespannten, Werkstück Sägespäne und dergl. absaugbar sind.

8. Hubsäge nach einem der Ansprüche 1 bis 7, **dadurch gekennzeichnet, daß** der Kapptisch (11) Eingriffsöffnungen (32) für Werkstück-Spanner (48) trägt, in denen diese, insbesondere in unterschiedlichen Spannpositionen, axial gesichert verriegelbar sind.

9. Hubsäge nach Anspruch 7, **dadurch gekennzeichnet, daß** der Kapptisch (61) aus Kunststoff besteht und die Drehachse (73) mit der Wippe (67) starr angeordnet trägt, wobei der Drehtisch (66) gegenüber der Wippe (67) drehbar gelagert ist.

## Claims

1. Power-operated tenon saw (10) having a saw blade (13) and a mitre table (11, 61), it being possible for the tenon saw to be releasably connected to the mitre table (11, 61), on which it is adjustably guided in a sawing manner, in particular parallel to the saw blade (13), relative to a workpiece (99) which can be clamped thereon, and with which the angle between the workpiece and the saw blade (13) of the tenon saw (10), in particular for mitre sawing, can be adjusted by means of a rotary table (16, 66), **characterized in that** the tenon saw is designed as a finecut saw (10) for the flush sawing of workpieces, and the mitre table (11, 61) carries a rocker (17, 67) on which the tenon saw (10) can be fixed in an adjustable manner, the rocker (17, 67) having two defined bearing surfaces (24) and one adjustable variable bearing surface (24) and two spike-like guide pins (15) for mounting the tenon saw, so that the tenon saw can be arranged on the mitre table in a secure position in a precisely reproducible manner.

2. Tenon saw according to Claim 1, **characterized in that** the rocker (17, 67) is mounted so as to be pivotable about a pivot (23, 73), running transversely to the saw blade (13), in such a way as to define the feed of the tenon saw (10).

3. Tenon saw according to either of the preceding claims, **characterized in that** the rotary table (16) carries the pivot (23) with the rocker (17).

4. Tenon saw according to one of the preceding claims, **characterized in that** the rotary table (16, 66) can be set in such a way that it can be both clamped in an infinitely variable manner in any desired angular positions and engaged in a latching manner, in particular an over-latching manner, in certain angular positions.

5. Tenon saw according to one of the preceding claims, **characterized in that** the latching positions of the rotary table (16, 66) can be set in adjustable manner relative to the mitre table (11, 61).

6. Tenon saw according to one of the preceding claims, **characterized in that** the mitre table (11) carries a button (19) on its front side for releasing the latching connection between the rotary table (16) and the mitre table (11).

7. Tenon saw according to one of the preceding claims, **characterized in that** the mitre table (11) has a dust extraction connection (21), from which sawdust and the like can be extracted via extraction slots (21/1) on both sides of a sawing slot, i.e. in front of and behind a workpiece positioned, in particular clamped, on the mitre table.

8. Tenon saw according to one of Claims 1 to 7, **characterized in that** the mitre table (11) has engagement openings (32) for workpiece clamps (48), in which the latter can be locked in an axially secured manner, in particular in different clamping positions.

9. Tenon saw according to Claim 7, **characterized in that** the mitre table (61) is made of plastic and carries the pivot (73) with the rocker (67) in a rigidly arranged manner, the rotary table (66) being mounted so as to be rotatable relative to the rocker (67).

## Revendications

1. Scie alternative à moteur (10) comportant une lame de scie (13) et une table de coupe (11, 61),
la scie alternative étant reliée de manière amovible à la table de coupe (11, 61), sur laquelle la scie est guidée de manière réglable par rapport à la pièce (99) serrée contre la table, en étant guidée de manière réglable, notamment parallèlement à lame de scie (13) et permettant de régler par un plateau tournant (16, 66), l'angle entre la pièce et la lame (13) de la scie alternative (10), notamment pour scier à l'onglet,
**caractérisée en ce que**
la scie alternative est réalisée comme scie de découpe fine (10) pour scier des pièces de manière ajustée, la table de coupe (11, 61) porte une bascule (17, 67) sur laquelle la scie alternative (1) est fixée de manière ajustable et la bascule (17, 67) présente deux surfaces d'appui (24) définies et ajustables de manière variable ainsi que deux goujons de guidage (15) en forme de broches pour recevoir la scie alternative, de sorte que la scie alternative soit bloquée en position d'une manière reproductible de façon précise sur la table de coupe.

2. Scie alternative selon la revendication 1,
**caractérisée en ce que**
la bascule (17, 67) pivote autour d'un axe de rotation (23, 73) transversal à la lame de scie (13) et définissant l'avance de la scie alternative (10).

3. Scie alternative selon l'une quelconque des revendications précédentes,
**caractérisée en ce que**
le plateau tournant (16) porte l'axe de rotation (23) avec la bascule (17).

4. Scie alternative selon l'une quelconque des revendications précédentes,
**caractérisée en ce que**
le plateau tournant (16, 66) peut être serré en continu dans n'importe quelle position angulaire et s'encliqueter dans des positions angulaires déterminées, notamment par enclipsage.

5. Scie alternative selon l'une quelconque des revendications précédentes,
**caractérisée en ce que**
les positions d'encliquetage du plateau tournant (16, 66) peuvent être réglées de manière ajustable par rapport à la table de coupe (11, 61).

6. Scie alternative selon l'une quelconque des revendications précédentes,
**caractérisée en ce que**
la table de coupe (11) porte sur son côté avant une touche (19) pour desserrer la liaison d'encliquetage entre le plateau tournant (16) et la table de coupe (11).

7. Scie alternative selon l'une quelconque des revendications précédentes,
**caractérisée en ce que**
la table de coupe (11) comporte un ajutage d'aspiration de poussières (21) d'où partent des fentes d'aspiration (21/1) de part et d'autre d'une fente de sciage, c'est-à-dire pour permettre d'aspirer les copeaux de sciage devant et derrière une pièce positionnée sur la table de coupe, notamment serrée sur celle-ci.

8. Scie alternative selon l'une quelconque des revendications 1 à 7,
**caractérisée en ce que**
la table de coupe (11) comporte des orifices (32) pour des serre joints de pièce (48) dans lesquels ces serre joints peuvent être bloqués en étant verrouillés axialement dans des positions de serrage différentes.

9. Scie alternative selon l'une quelconque des revendications 7,
**caractérisée en ce que**
la table de coupe (61) est en matière plastique et l'axe de rotation (73) avec la bascule (67) est porté rigidement par celle-ci, le plateau tournant (66) étant pivotant par rapport à la bascule (67).
